# EUROPEAN PATENT SPECIFICATION

(11) **EP 2 949 765 B1**
(45) Date of publication and mention of the grant of the patent: **06.03.2019**
(21) Application number: 14184581.8
(22) Date of filing: 12.09.2014
(51) Int. Cl.: C21B 5/04, C21B 13/00, C21C 7/06, C10L 5/04, C10L 5/10, C22B 1/242, C22B 1/245, C22B 9/10, C21C 5/52, C21C 5/54

(54) **COMPOSITE BRIQUETTE AND METHOD FOR MAKING A STEELMAKING FURNACE CHARGE**
VERBUNDBRIKETT UND VERFAHREN ZUR HERSTELLUNG EINER STAHLSCHMELZE
BRIQUETTE COMPOSITE POUR LA FABRICATION D'ACIER ET MÉTHODE DE FABRICATION DUDIT ACIER

(30) Priority: 29.05.2014 US 201414289960
(43) Date of publication of application: 02.12.2015
(73) Proprietor: Exothermic Distribution Corporation, Burlington, ON L7R 1A7 (CA)
(72) Inventor: Vayda, Pierre, Burlington, Ontario L7R 1A7 (CA)
(74) Representative: Burnett, Christopher James

(56) References cited:
- DE-A1- 10 149 465
- GB-A- 1 471 434
- US-A1- 2007 051 200
- US-A1- 2007 266 824

## Description

### Field

The present invention relates generally to ferrous metallurgy and in particular, to a composite briquette for a steelmaking or ironmaking furnace charge.

### Background

In the field of steelmaking, an electric furnace charge is typically made from scrap metal, carbon and fluxes such as lime and/or dolime, all in pieces having a minimum size of 0.5 inch (about 12.7 mm).

It is known to add specific materials to a furnace charge in the form of briquettes. However, carbon, which is an essential part of the mixture of materials, is quite slippery in its powdered or comminuted form. Consequently, carbon is typically employed in a non-pulverized state, for example as metallurgical coke. It would be of advantage to be able to utilize carbon "fines", for example those recovered from a dust collector, and to recycle such fines in their powdered or dust state. A further problem relates to the density of carbon, which is quite low compared generally to the metals. For example, when carbon is added to the furnace via a charge bucket, it will tend to float on top of the liquid metal, thus decreasing the yield of carbon in solution in the steel.

It would also be of advantage to improve the quality of the slag through the addition of a briquette.

It is an object at least to provide a novel composite briquette for a steelmaking or ironmaking furnace charge.

NL 7 306 342 describes a process for the treatment and for the removal of impurities of an iron melt comprising magnesium carbide and or magnesium cyanamide.

DE 101 49 465 describes a composition which contains two or more of magnesium hydroxide, magnesium carbonate and magnesium oxide. Also described is a process for adjusting the slag on a steel melt in a metallurgical vessel by adding this composition.

US 2007/051200 describes a briquette and method of making thereof, the briquette comprising binder, carbon fines and a powdered material selected from the group consisting of lime, dolime, magnesia, limestone, dolomite, magnesium carbonate, iron ore and mixtures thereof.

US 2007/266824 describes a slag conditioner comprising by weight a mixture and 2% to 25% binder for bonded agglomerates or larger particles of said mixture, said mixture comprising: 10% to 60% particulates comprised of bag house dust essentially containing oxides of iron, calcium, silicon, magnesium, zinc, lead and cadmium; 20% to 90% burned aggregates comprised of particles less than 8 mm of which at least 30% is 0.2 mm or greater and containing between 35% and 94% MgO; up to 50% slag-making carbonaceous additive; and up to 50% light burned magnesite

### Summary of the Invention

There is described a composite briquette for addition to the charge in a steelmaking or ironmaking furnace, the briquette comprising: at least 15 % by weight of magnesium carbonate; and a binder. Preferably, the briquette comprises about 50 to 95 % by weight of magnesium carbonate, more preferably about 70 to 95 %, and most preferably about 90% by weight of magnesium carbonate.

The briquette may comprise from about 1 to 20 % by weight of the binder. Preferably, the briquette comprises from about 1 to 15 % by weight of the binder. More preferably, the briquette comprises about 5 to 15 % by weight of the binder, more preferably about 7 to 12 % by weight of the binder, most preferably about 10 % by weight of the binder. Preferably the briquette comprises about 90 % by weight magnesium carbonate and about 10 % by weight of the binder.

The briquette may further comprise one or more substances selected from the group consisting of: limestone (CaCO₃), dolomite (CaMg(CO₃)₂), dolime (CaO·MgO), burnt lime (CaO), hydrated lime (Ca(OH)₂), and magnesium oxide (MgO).

The briquette may further comprise one or more carbonaceous substances selected from the group consisting of: metallurgical coke, carbon fines, anthracite, and non-anthracitic coal. The briquette may comprise from 5 to 50 % by weight of the carbonaceous substances. More preferably, the briquette comprises about 10 to 40 % by weight of the carbonaceous substances, more still preferably about 10 to 35 % by weight of the carbonaceous substances, most preferably either about 14 % or about 30 % by weight of the carbonaceous substances.

Preferably the carbonaceous substance is metallurgical coke. The briquette may comprise about 15 % by weight metallurgical coke. Preferably the briquette comprises about 75% by weight magnesium carbonate, about 15% by weight metallurgical coke, and about 10 % by weight of the binder. The briquette may further comprise from 1 to 15 % by weight of magnesium oxide. Preferably the briquette comprises about 9% by weight of magnesium oxide. Preferably the briquette comprises about 52% by weight magnesium carbonate, about 30% by weight metallurgical coke, about 9 % by weight magnesium oxide, and about 9 % by weight of the binder.

The magnesium carbonate may be powdered magnesium carbonate ore, and wherein briquette, after calcining, may further comprise one or more substances selected from the group consisting of: CaO, Al₂O₃, SiO₂, and Fe₂O₃.

The binder may comprise molasses and hydrated lime. The binder may comprise dextrin combined with water.

The furnace may be an electric arc furnace, a basic oxygen furnace, or a blast furnace.

There is also provided the use of the briquette as addition to the charge in the steelmaking or ironmaking furnace, the furnace being an electric arc furnace, a basic oxygen furnace, or a blast furnace.

There is described a method of improving the slag-covered charge in a steelmaking or ironmaking furnace, the method comprising: introducing a quantity of magnesium carbonate to the charge below the slag in the steelmaking or ironmaking furnace, whereby upon introducing the quantity of magnesium carbonate to the charge, CO₂ is generated, such that the CO₂ foams the slag from underneath.

The quantity of magnesium carbonate may be in the form of an unbound powder. The unbound powder may be magnesium carbonate ore, and the unbound powder, after calcining, may further comprise one or more substances selected from the group consisting of: CaO, Al₂O₃, SiO₂, and Fe₂O₃.

The quantity of magnesium carbonate may be combined with a binder, and the method may further comprise: prior to said introducing, compressing said quantity of magnesium carbonate and said binder in a suitable mold to make a briquette, whereby said introducing comprises introducing said briquette to the charge below the slag in the steelmaking or ironmaking furnace. Preferably, the briquette comprises about 50 to 95 % by weight of magnesium carbonate, more preferably about 70 to 95 %, and most preferably about 90% by weight magnesium carbonate.

The briquette may comprise from about 1 to 20 % by weight of the binder. Preferably, the briquette comprises from about 1 to 15 % by weight of the binder. More preferably, the briquette comprises about 5 to 15 % by weight of the binder, more preferably about 7 to 12 % by weight of the binder, most preferably about 10 % by weight of the binder. Preferably the briquette comprises about 90 % by weight magnesium carbonate and about 10 % by weight of the binder. The briquette may further comprise one or more carbonaceous substances selected from the group consisting of: metallurgical coke, carbon fines, anthracite, and non-anthracitic coal. The briquette may comprise from 5 to 50 % by weight of the carbonaceous substances. More preferably, the briquette comprises about 10 to 40 % by weight of the carbonaceous substances, more still preferably about 10 to 35 % by weight of the carbonaceous substances, most preferably either about 14 % or about 30 % by weight of the carbonaceous substances.

Preferably the carbonaceous substance is metallurgical coke. The briquette may comprise about 15% by weight metallurgical coke. Preferably the briquette comprises about 75% by weight magnesium carbonate, about 15% by weight metallurgical coke, and about 10 % by weight of the binder. The briquette may further comprise from 1 to 15 % by weight of magnesium oxide. Preferably the briquette comprises about 9% by weight of magnesium oxide. Preferably the briquette comprises about 52% by weight magnesium carbonate, about 30% by weight metallurgical coke, about 9 % by weight magnesium oxide, and about 9 % by weight of the binder. The magnesium carbonate may be powdered magnesium carbonate ore, and the briquette, after calcining, may further comprise one or more substances selected from the group consisting of: CaO, Al₂O₃, SiO₂, and Fe₂O₃. The binder may comprise molasses and hydrated lime. The binder may comprise dextrin combined with water.

The furnace may be an electric arc furnace, a basic oxygen furnace, or a blast furnace.

In an aspect, there is provided a composite briquette for addition to the charge in a steelmaking or ironmaking furnace, the briquette comprising: a quantity of carbon fines; a material in powdered form, the material selected from the group consisting of: iron powder and iron oxide, the material densifying the briquette and suppressing the slippery nature of the carbon fines; a quantity of magnesium carbonate; and a binder.

50 % of the total briquette weight is carbon fines, 25 % of the total briquette weight is iron powder, and the remainder of the total briquette weight, apart from the binder, is magnesium carbonate and limestone.

The binder may comprise molasses and hydrated lime. The binder may comprise dextrin combined with water.

The furnace may be an electric arc furnace, a basic oxygen furnace, or a blast furnace.

There is also provided the use of the briquette as addition to the charge in the steelmaking or ironmaking furnace, the furnace being an electric arc furnace, a basic oxygen furnace.

In another aspect, there is provided a method of improving the slag-covered charge in a steelmaking furnace, the method comprising: making a mixture of: a quantity of carbon fines, a quantity of iron powder, a quantity of magnesium carbonate, a quantity of limestone and a binder; compressing a portion of said mixture in a suitable mold to make a briquette; and introducing said briquette to the charge below the slag in the steelmaking furnace.

50 % of the total briquette weight is carbon fines, 25 % of the total briquette weight is iron powder, and the remainder of the total briquette weight, apart from the binder, is magnesium carbonate and limestone.

The material may be iron powder, whereby upon introducing the briquette to the charge, CO₂ is generated such that the CO₂ foams the slag from underneath.

The material may be iron oxide, whereby upon introducing the briquette to the charge, caloric heat is added thereto while iron and CO₂ are generated, such that the CO₂ foams the slag from underneath.

The mixture may comprise from 1 to 20 % by weight of the binder. Preferably, the briquette comprises from about 1 to 15 % by weight of the binder. More preferably, the briquette comprises about 5 to 15 % by weight of the binder, more preferably about 7 to 12 % by weight of the binder, most preferably about 10 % by weight of the binder.

The binder may comprise molasses and hydrated lime. The binder may comprise dextrin combined with water.

The furnace may be an electric arc furnace, or a basic oxygen furnace.

### Detailed Description

The following is directed to a composite briquette for addition to the charge in a steelmaking or ironmaking furnace, and which comprises magnesium carbonate (MgCO₃).

Magnesium carbonate is known to thermally decompose at a lower temperature than dolomite (CaMg(CO₃)₂) and limestone (CaCO₃). Specifically, MgCO₃ thermally decomposes into magnesium oxide (MgO) and carbon dioxide (CO₂) at about 402 °C, while CaMg(CO₃)₂ and CaCO₃ each thermally decompose into their constituent oxides at about 730 °C and about 825 °C, respectively. As a result, when added to the charge in a steelmaking or ironmaking furnace, magnesium carbonate thermally decomposes more quickly, and more readily, than limestone or dolomite.

Table 1 shows a non-limiting example of a mixture from which a briquette can be fashioned:

**TABLE 1:**

| | | |
|---|---|---|
| Carbon | C | 50 % |
| Powdered iron | Fe | 25 % |
| Magnesium carbonate | MgCO₃ | 25 % |
| Total | | 100 % |

In the table above, deviations from the indicated percentages are permissible. In this mixture, the carbon is in the form of loose carbon fines recovered from a dust collector, such as a dust collector of an electric arc furnace, and the magnesium carbonate is in the form of powdered magnesium carbonate ore. The mixture may be combined with a suitable binder, such as for example industrial molasses and powdered hydrated lime (Ca(OH)₂), and the binder may make up 1 to 20 %, or more, of the total weight of the briquette.

The example illustrated in Table 1 specifies powdered iron. However, this teaching is not intended to be restrictive, as it is possible to use one or more of iron, iron oxide, chromium, chromium oxide, nickel, and nickel oxide to achieve the same effect. If iron oxide is used, the reaction products will be iron and CO₂ gas, as well as caloric heat that results from burning of the iron oxide. The iron will revert to the bath, thus increasing its yield.

The magnesium carbonate could be combined with limestone and/or dolomite, each of which will produce CO₂ gas. Dolime (CaO·MgO), burnt lime (CaO), hydrated lime (Ca(OH)₂), and/or magnesium oxide (MgO) may also be included.

The ironmaking furnace may be, for example, a blast furnace. The steelmaking furnace may be, for example, an electric arc furnace, a basic oxygen furnace, and the like. Preferably, the furnace is a blast furnace or an electric arc furnace.

In use, the briquette is added to the charge in a steelmaking or ironmaking furnace, in such a manner that it is immersed within the charge. The briquette dissolves and reacts with the contents of the charge. The powdered iron reverts to the bath, thus increasing its yield. The magnesium carbonate thermally decomposes into magnesium oxide (MgO) and carbon dioxide (CO₂). The MgO produced is absorbed by the slag. The CO₂ produced has the effect of foaming the slag from underneath, as the location where the CO₂ is generated is buried within the charge.

As will be appreciated, the low decomposition temperature of magnesium carbonate advantageously allows the slag thickness to be increased more rapidly than, and with less energy consumption than, other substances such as limestone, dolomite, and the like. As will be understood, the rapid formation of a thick slag decreases the amount of oxidation of iron in the bath, which improves the reaction yield. Additionally, if the steelmaking furnace is an electric arc furnace, the increased thickness of the slag advantageously causes the arc to be more localized within the bath and under the slag, which improves efficiency of the electric arc furnace and thereby allows melt times to be shortened. These performance characteristics help mitigate the environmental impact of steelmaking and ironmaking operations, and conserve resources.

As will be appreciated, the accompanying production of CO₂ gas that occurs upon decomposition of magnesium carbonate causes bubbling under the surface of the bath, which advantageously causes mixing and improves the quality of the slag, and namely the foaminess, consistency and stability of the slag.

As will be appreciated, the addition of MgO to the slag advantageously results in formation of a protective layer of MgO on the walls of the furnace. As will be understood, as the melt is being drained from the furnace, the slag contacts the wall surfaces of the furnace and deposits a layer of MgO thereon. As a result, a new protective refractory coating is automatically deposited on the walls of the furnace with each use, which eliminates the need for separate application of a protective wall coating that would otherwise form part of routine furnace maintenance.

Preferably, the briquette comprises from 20 to 80 % by weight of the carbon fines. More preferably, the briquette comprises 30 to 70 % by weight of the carbon fines, more preferably 40 to 60 %, most preferably about 45 % or about 50%.

Although the carbon is described above as being in the form of carbon fines, the carbon may alternatively be in the form of one or more other carbonaceous substances, such as for example metallurgical coke, anthracite, non-anthracitic coal, and the like.

The briquette is not limited to the composition described above, the briquette may alternatively have other compositions. For example, magnesium carbonate may be added to the charge of a steelmaking or ironmaking furnace to improve the quality of the slag.

For example, powdered magnesium carbonate ore may be combined with a suitable binder, such as for example industrial molasses and powdered hydrated lime, and compressed in a suitable mold to make a briquette. The binder may make up 1 to 20 %, or more, of the total weight of the briquette.

The amount of magnesium carbonate in the briquette may be selected according to the particular characteristics of the furnace and to the particular steel grade. Preferably, the briquette comprises at least 15 % by weight of magnesium carbonate. More preferably, the briquette comprises 50 to 95 % by weight of magnesium carbonate, still more preferably 70 to 95 %, and most preferably 90 %.

The magnesium carbonate could be combined with one or more other substances, if adjustment of slag functionalities (e.g. alumina gettering, desulphurization, etc.) is desired. Such substances may comprise, for example, limestone and/or dolomite, each of which will produce CO₂ gas upon decomposition, and/or any of dolime, burnt lime, hydrated lime, and magnesium oxide. Still other substances may be combined with the magnesium carbonate. As will be understood, an advantage of using a binder comprising hydrated lime is the efficient and controlled addition of CaO to the slag for predictable adjustment of slag functionalities.

The ironmaking furnace may be, for example, a blast furnace. The steelmaking furnace may be, for example, an electric arc furnace, a basic oxygen furnace, and the like. Preferably, the furnace is a blast furnace or an electric arc furnace.

In use, the briquette is added to the charge in a steelmaking or ironmaking furnace, in such a manner that it is immersed within the charge. The briquette dissolves and reacts with the contents of the charge. The magnesium carbonate thermally decomposes into magnesium oxide (MgO) and carbon dioxide (CO₂). The MgO produced is absorbed by the slag. The CO₂ produced has the effect of foaming the slag from underneath, as the location where the CO₂ is generated is buried within the charge.

Magnesium carbonate ore, in absence of a binder, may be added in powdered or granular form to the charge of a steelmaking or ironmaking furnace for improving the quality of the slag.

The briquette may alternatively comprise a mixture of magnesium carbonate and one or more carbonaceous substances, such as metallurgical coke, carbon fines, anthracite, non-anthracitic coal, and the like. For example, powdered magnesium carbonate ore and powdered metallurgical coke may be combined with a suitable binder, such as for example industrial molasses and powdered hydrated lime, and compressed in a suitable mold to make a briquette. The binder may make up 1 to 20 %, or more, of the total weight of the briquette.

The amount of magnesium carbonate in the briquette may be selected according to the particular characteristics of the furnace and to the particular steel grade. Preferably, the briquette comprises at least 15 % by weight of magnesium carbonate. Preferably, the briquette comprises 30 to 90 % by weight of magnesium carbonate, more preferably 40 to 90 %, most preferably about 50 to about 75 %.

Preferably, the briquette comprises from 5 to 50 % by weight of the one or more carbonaceous substances. More preferably, the briquette comprises 10 to 40 % by weight of the one or more carbonaceous substances, more still preferably 10 to 35 %, most preferably either about 14 % or about 30 %.

One or more other substances could be combined with the powdered magnesium carbonate ore and powdered metallurgical coke, if adjustment of slag functionalities (e.g. alumina gettering, desulphurization, etc.) is desired. Such substances may comprise, for example, limestone and/or dolomite, each of which will produce CO₂ gas upon decomposition, and/or any of dolime, burnt lime, hydrated lime, and magnesium oxide. Still other substances may be combined with the magnesium carbonate and powdered metallurgical coke.

The ironmaking furnace may be, for example, a blast furnace. The steelmaking furnace may be, for example, an electric arc furnace, a basic oxygen furnace, and the like. Preferably, the furnace is a blast furnace or an electric arc furnace.

In use, the briquette is added to the charge in a steelmaking or ironmaking furnace, in such a manner that it is immersed within the charge. The briquette dissolves and reacts with the contents of the charge. The magnesium carbonate thermally decomposes into magnesium oxide (MgO) and carbon dioxide (CO₂). The MgO produced is absorbed by the slag. The CO₂ produced has the effect of foaming the slag from underneath, as the location where the CO₂ is generated is buried within the charge.

As will be appreciated, the combination of a carbonaceous substance with one or more denser compounds, such as magnesium carbonate, in briquette form advantageously enables carbon to be introduced into the bath in a more facile manner, as compared to adding loose carbonaceous powder, and thereby increases the carbon addition efficiency. This higher carbon addition efficiency advantageously allows the final carbon composition in the bath and in the slag to be more accurately predicted.

Although the binder is described above as comprising industrial molasses and hydrated lime, the binder may alternatively comprise dextrin and water, which may for example be combined in a 7:3 weight ratio. Still other suitable binders may alternatively be used.

The briquette may comprise from 1 to 20 % or more, by weight, of the binder. Preferably, the briquette comprises from 1 to 15 % by weight of the binder. More preferably, the briquette comprises 5 to 15 % by weight of the binder, more preferably 7 to 12 %, most preferably 10 %.

Although the powdered magnesium carbonate is described above as being in the form of powdered magnesium carbonate ore, other suitable sources of magnesium carbonate may alternatively be used.

The briquette described above may be made from powders having particle sizes within any suitable range.

The following examples illustrate various applications of the present invention.

### EXAMPLE 1

In this example, a briquette having the composition shown in Table 2 was made:

**TABLE 2:**

| | |
|---|---|
| Carbon fines | 43.6 % |
| Fe | 22.1 % |
| Dolomite | 24.3 % |
| Molasses | 6.0 % |
| Lime (hyd.) | 4.0 % |

The briquette was formed by providing a mixture of loose carbon fines (particle size range of about 0.8 to about 1.0 mm) recovered from a dust collector of an electric arc furnace, powdered iron (particle size range of about 0.4 to about 0.6 mm), and a powdered dolomite ore (particle size range of about 0.8 to about 4.8 mm), together with a binder consisting of a mixture of industrial molasses and powdered hydrated lime.

As will be understood, the powdered iron could be replaced with powdered iron oxide (Fe₂O₃), which will produce CO₂ gas and contribute to the foaming effect described above.

The briquette had the post-calcination composition shown in Table 3:

**TABLE 3:**

| | |
|---|---|
| C | 43.7 % |
| Fe | 22.5 % |
| CaO | 12.2 % |
| MgO | 6.6 % |
| S | 2.9 % |
| L.O.I. | 12.1 % |

The loss on ignition (L.O.I.) is mainly attributed to the decomposition of the dolomite and the binder used. The layer of CO and CO₂ produced will protect the bath from oxidation and enhance the carbon yield.

The manufacturing process by which the briquette is formed has the effect of densification, with the following typical values: loose carbon prior to compression has a density of approximately 0.63 to 0.65 g/cm³. If a briquette is manufactured from the loose carbon only, the density can be raised into the range of 1.6 to 1.75 g/cm³. However, utilizing the formulation given at the beginning of this example, and compressing the formulation, will yield a density in the range of 2.4 to 2.6 g/cm³.

The densification due to compression has the effect of increasing the efficiency of the carbon addition, since the carbon is allowed to penetrate the bath, rather than simply floating on top of the bath.

### EXAMPLE 2

In this example, a briquette having the post-calcination composition shown in Table 4 was made:

**TABLE 4:**

| | |
|---|---|
| MgO | 92.19 % |
| CaO | 2.46 % |
| Al₂O₃ | 0.85 % |
| SiO₂ | 2.58 % |
| TiO₂ | 0.14 % |
| Fe₂O₃ | 0.71 % |
| Cr₂O₃ | 0.02 % |
| MnO | 0.05 % |
| S | < 0.001 % |
| Moisture | 1.0 % |
| Total | 100 % |

The briquette was formed by providing a mixture of powdered magnesium carbonate ore (particle size range of about 0.8 to about 4.8 mm) and a binder, combined in a weight ratio of 90:10, and compressing the mixture in a suitable mold. The binder was a mixture of industrial molasses and powdered hydrated lime, combined in a weight ratio of 3:2.

The briquette had a generally square shape and a size of about 40 mm per side, with a density of 2.18 g/cm³ and a white colour. The briquette had a L.O.I. value of 35.0 %, which is mainly attributed to the decomposition of the magnesium carbonate and the binder. Notably, the L.O.I. value of the briquette is lower than the L.O.I. value of the unbound powder of Example 3.

The briquette was used during reactions in a 125 tonne electric arc furnace. A summary of the performance of the briquette ("Briquette A") during the reactions is shown in Table 5. For comparison, a summary of the performance of a standard conventional additive, namely crushed brick ("standard practice"), during the reactions is also shown:

**TABLE 5:**

| | Standard Practice | Briquette A | difference |
|---|---|---|---|
| Number of Heats | 44 | 11 | |
| Quantity added (lbs) | 3500 | 3500 | |
| Actual MgO added (lbs) | 3220 | 2100 | -34.78 % |
| Average MgO in solution (%) | 8.79 ± 1.75 | 9.20 ± 1.88 | +4.66 % |
| Briquette A with 1^{st} charge (%) | | 10.69 ± 1.80 | |
| Briquette A with 2^{nd} charge (%) | | 7.95 ± 0.62 | |

As may be seen, the use of Briquette A results in a reduction of the actual MgO added by about 35 %, while advantageously increasing the average MgO in the slag by about 4.5 %. The amount of MgO in the slag is about 34 % higher when the Briquette A was added with the first charge (i.e. when little or no slag layer previously existed) than when the Briquette A was added with the second charge.

The decomposition of magnesium carbonate within Briquette A produces fine, active MgO particles, which are absorbed by the slag. It was observed that when Briquettes A were added and the briquettes penetrated the slag so as to be buried in the charge, tiny bubbles of CO₂ were seen to form.

The average composition of the slag after the reactions, by weight percent, is shown in Table 6:

**TABLE 6:**

| | Standard Practice | Briquette A | difference |
|---|---|---|---|
| CaO | 36.07 ± 3.72 | 36.41 ± 3.04 | + 0.93 % |
| Al₂O₃ | 6.99 ± 1.98 | 7.68 ± 0.99 | + 9.87 % |
| SiO₂ | 11.83 ± 3.75 | 13.23 ± 1.44 | + 11.83 % |
| Fe₂O₃ | 27.71 ± 7.32 | 24.59 ± 5.53 | - 11.26 % |
| Mn₂O₃ | 5.46 ± 1.03 | 5.31 ± 0.37 | - 2.82 % |

As may be seen, the use of Briquette A results in a reduction of the iron content of the slag by more than 11 %, as compared to standard practice. This may be attributed to the ability of the magnesium carbonate to rapidly decompose and contribute to or form the slag, which allows a protective barrier to more quickly form on the bath surface. As a result, less of the iron in the bath is oxidized during the reaction, which advantageously increases the yield of the reaction.

During the test, 22 heats were carried out using crushed brick, followed by 11 heats carried out using Briquette A, followed by 22 heats carried out using crushed brick. The operational performance of the 125 tonne electric arc furnace before, during, and after the addition of Briquette A is shown in Table 7:

**TABLE 7:**

| | Standard Practice (before test) | Standard Practice (after test) | Standard Practice (avg) | Briquette A |
|---|---|---|---|---|
| Power usage (KWh/T) | 427.0 ± 24.1 | 428.0 ± 14.4 | 427.5 | 420.0 ± 9.9 |

As may be seen, the amount of power required for the reaction is lower when Briquette A is used, as compared to standard practice.

### EXAMPLE 3

Magnesium carbonate may alternatively be added to the charge in the form of an unbound powder. An unbound, powdered magnesium carbonate ore (particle size range of about 0.8 to about 4.8 mm) having the post-calcination composition shown in Table 8 was used :

**TABLE 8:**

| | |
|---|---|
| MgO | 97.0 % |
| CaO | 2.0 % |
| Al₂O₃ | 0.2 % |
| SiO₂ | 0.3 % |
| Fe₂O₃ | 0.5 % |
| Total | 100 % |

The unbound powder had a density of 2.28 g/cm³ and a white colour.

The unbound powder was used during a reaction in a 125 tonne electric arc furnace.

The unbound powder had a L.O.I. value of 51.1 %. Notably, the L.O.I. value of the unbound powder is greater than the L.O.I. value of the briquette of Example 2.

### EXAMPLE 4

In this example, a briquette having the composition shown in Table 9 was made:

**TABLE 9:**

| | |
|---|---|
| Metallurgical coke | 30.3 % |
| MgO | 9.1 % |
| MgCO₃ | 51.6 % |
| Molasses | 5.4 % |
| Lime (hyd.) | 3.6 % |

The briquette was formed by providing a mixture of powdered metallurgical coke (particle size range of about 0.8 to about 1.0 mm), powdered magnesium oxide (particle size range of about 0.4 to about 0.6 mm), and powdered magnesium carbonate ore (particle size range of about 0.8 to about 4.8 mm), together with a binder consisting of a mixture of industrial molasses and powdered hydrated lime.

The briquette had a generally square shape and a size of about 54 mm per side, with a density of about 2.0 g/cm³ and a black colour.

The briquette had the post-calcination composition shown in Table 10:

**TABLE 10:**

| | |
|---|---|
| C | 28.7 % |
| Fe | 0.5 % |
| CaO | 3.5 % |
| MgO | 35.3 % |
| Al₂O₃ | 0.5 % |
| SiO₂ | 1.7 % |
| N | 0.1 % |
| L.O.I. | 29.7 % |

The briquette had a L.O.I. value of 29.7 %, which is mainly attributed to the decomposition of the magnesium carbonate and the binder.

The density of the briquette, namely 2.0 g/cm³, is greater than that of loose powdered metallurgical coke, which has a density of about 0.5 g/cm³. As will be appreciated, the higher density of the briquette has the effect of increasing the efficiency of the carbon addition, since the carbon is allowed to penetrate the bath, rather than simply floating on top of the bath.

### EXAMPLE 5

In this example, a briquette having the composition shown in Table 11 was made:

**TABLE 11:**

| | |
|---|---|
| Metallurgical coke | 14.0 % |
| MgCO₃ | 76.0 % |
| Molasses | 6.0 % |
| Lime (hyd.) | 4.0 % |

The briquette was formed by providing a mixture of powdered metallurgical coke (particle size range of about 0.8 to about 1.0 mm) and powdered magnesium carbonate ore (particle size range of about 0.8 to about 4.8 mm), together with a binder consisting of a mixture of industrial molasses and powdered hydrated lime.

The briquette had a generally square shape and a size of about 54 mm per side, with a density of about 2.0 g/cm³ and a black colour.

The briquette had the post-calcination composition shown in Table 12:

**TABLE 12:**

| | |
|---|---|
| C | 14.1 % |
| FeO | 0.2 % |
| CaO | 3.4 % |
| MgO | 38.7 % |
| Al₂O₃ | 0.1 % |
| SiO₂ | 0.6 % |
| N | 0.1 % |
| L.O.I. | 42.8 % |

The briquette had a L.O.I. value of 42.8 %, which is mainly attributed to the decomposition of the magnesium carbonate and the binder.

The density of the briquette, namely 2.0 g/cm³, is greater than that of loose powdered metallurgical coke, which has a density of about 0.5 g/cm³. As will be appreciated, the higher density of the briquette has the effect of increasing the efficiency of the carbon addition, since the carbon is allowed to penetrate the bath, rather than simply floating on top of the bath.

Although embodiments have been described above, those of skill in the art will appreciate that variations and modifications may be made without departing from the scope thereof as defined by the appended claims.

## Claims

1. A composite briquette for addition to the charge in a steelmaking furnace, the briquette comprising:
a quantity of carbon fines;
a quantity of iron powder;
a quantity of magnesium carbonate;
a quantity of limestone; and
a binder,
wherein 50 % of the total briquette weight is carbon fines, 25 % of the total briquette weight is iron powder, and the remainder of the total briquette weight, apart from the binder, is magnesium carbonate and limestone.

2. The briquette of claim 1 wherein the briquette comprises from 1 to 10 % by weight of the binder.

3. The briquette of claim 1 or 2, wherein the binder comprises molasses and hydrated lime.

4. Use of the briquette of any one of claims 1 to 3 as addition to the charge in the steelmaking furnace, the furnace being an electric arc furnace or a basic oxygen furnace.

5. A method of improving the slag-covered charge in a steelmaking furnace, the method comprising:
making a mixture of: a quantity of carbon fines, a quantity of iron powder, a quantity of magnesium carbonate, a quantity of limestone, and a binder, wherein 50 % of the total briquette weight is carbon fines, 25 % of the total briquette weight is iron powder, and the remainder of the total briquette weight, apart from the binder, is magnesium carbonate and limestone;
compressing a portion of said mixture in a suitable mold to make a briquette; and
introducing said briquette to the charge below the slag in the steelmaking furnace.

6. The method of claim 5, wherein the mixture comprises from 1 to 10 % by weight of the binder.

7. The method of claim 5 or 6, wherein the binder comprises molasses and hydrated lime.

## Patentansprüche

1. Kompositbrikett zur Beigabe zur Ladung in einem Ofen zur Stahlherstellung, das Brikett umfassend:
Eine Menge an Feinkohle;
eine Menge an Eisenpulver;
eine Menge an Magnesiumkarbonat;
eine Menge an Kalkstein;
und ein Bindemittel,
wobei 50 % des gesamten Brikettgewichts aus Feinkohle besteht, 25 % des gesamten Brikettgewichts aus Eisenpulver besteht und der Rest des gesamten Brikettgewichts, das Bindemittel ausgenommen, aus Magnesiumkarbonat und Kalkstein besteht.

2. Brikett nach Anspruch 1, wobei das Brikett nach Gewicht zwischen 1 und 10 % Bindemittel umfasst.

3. Brikett nach Anspruch 1 oder 2, wobei das Bindemittel Melasse und hydrierten Kalk umfasst.

4. Nutzung des Briketts nach einem der Ansprüche 1 bis 3 als Beigabe zur Ladung in einem Ofen zur Stahlherstellung, wobei der Ofen entweder ein Lichtbogenofen oder ein Sauerstoffaufblasofen ist.

5. Verfahren zum Verbessern der mit Schlacke bedeckten Ladung in einem Ofen zur Stahlherstellung, das Verfahren umfassend:
das Herstellen einer Mischung aus: einer Menge Feinkohle, einer Menge Eisenpulver, einer Menge Magnesiumkarbonat, einer Menge Kalkstein und einem Bindemittel, wobei 50 % des gesamten Brikettgewichts aus Feinkohle besteht, 25 % des gesamten Brikettgewichts aus Eisenpulver besteht und der Rest des gesamten Brikettgewichts, ausgenommen das Bindemittel, aus Magnesiumkarbonat und Kalkstein besteht;
das Pressen eines Teils der besagten Mischung in einer geeigneten Form, um ein
Brikett herzustellen; und
besagtes Brikett zur Ladung unter die Schlacke im Ofen zur Stahlherstellung einzubringen.

6. Verfahren nach Anspruch 5, wobei die Mischung nach Gewicht zwischen 1 und 10 % Bindemittel umfasst.

7. Verfahren nach Anspruch 5 oder 6, wobei das Bindemittel Melasse und hydrierten Kalk umfasst.

## Revendications

1. Briquette composite destinée à être ajoutée à la charge dans un four sidérurgique, la briquette comprenant :
une quantité de fines de carbone ;
une quantité de poudre de fer ;
une quantité de carbonate de magnésium ;
une quantité de calcaire ;
et un liant,
dans laquelle 50 % du poids total de la briquette est constitué de fines de carbone, 25 % du poids total de la briquette est constitué de la poudre de fer, et le reste du poids total de la briquette, à l'exception du liant, est constitué du carbonate de magnésium et du calcaire.

2. Briquette selon la revendication 1, dans laquelle la briquette comprend entre 1 à 10 % en poids du liant.

3. Briquette selon la revendication 1 ou 2, dans laquelle le liant comprend de la mélasse et de la chaux hydratée.

4. Utilisation de la briquette selon l'une quelconque des revendications 1 à 3 en complément de la charge dans le four sidérurgique, le four étant un four à arc électrique ou un four à oxygène basique.

5. Procédé d'amélioration de la charge recouverte de laitier dans un four sidérurgique, le procédé comprenant :
la fabrication d'un mélange de : une quantité de fines de carbone, une quantité de poudre de fer, une quantité de carbonate de magnésium, une quantité de calcaire et un liant, où 50% du poids total de la briquette est constitué de fines de carbones, 25% du poids total de la briquette est constitué de poudre de fer, et le reste du poids total de la briquette, à l'exception du liant, est constitué de carbonate de magnésium et de calcaire ;
la compression d'une partie dudit mélange dans un moule approprié pour fabriquer une briquette ; et
l'introduction de ladite briquette dans la charge sous le laitier dans le four sidérurgique.

6. Procédé selon la revendication 5, dans lequel le mélange comprend entre 1 à 10 % en poids du liant.

7. Procédé selon la revendication 5 ou 6, dans lequel le liant comprend de la mélasse et de la chaux hydratée.
